(19) Europäisches Patentamt
European Patent Office
Office européen des brevets

(11) **EP 4 692 244 A1**

(12) **EUROPEAN PATENT APPLICATION**
published in accordance with Art. 153(4) EPC

(43) Date of publication:
**11.02.2026 Bulletin 2026/07**

(21) Application number: 24779330.0

(22) Date of filing: **11.03.2024**

(51) International Patent Classification (IPC):
*C08L 101/00* [(2006.01)]   *C08K 5/56* [(2006.01)]
*C08K 5/057* [(2006.01)]   *C08L 23/00* [(2006.01)]
*H01B 7/02* [(2006.01)]

(52) Cooperative Patent Classification (CPC):
C08K 5/057; C08K 5/56; C08L 23/00; C08L 101/00;
H01B 7/02

(86) International application number:
**PCT/JP2024/009253**

(87) International publication number:
**WO 2024/203199 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.03.2023  JP 2023051164**

(71) Applicant: FURUKAWA ELECTRIC CO., LTD.
**Tokyo 100-8322 (JP)**

(72) Inventors:
• **MATSUMOTO, Kana**
  **Tokyo 100-8322 (JP)**
• **YAMAZAKI, Takanori**
  **Tokyo 100-8322 (JP)**
• **CHIBA, Hiroki**
  **Tokyo 100-8322 (JP)**

(74) Representative: **Forstmeyer, Dietmar et al**
  **Boeters & Lieck**
  **Oberanger 32**
  **80331 München (DE)**

(54) **SILANE CROSSLINKABLE RESIN COMPOSITION, SILANE CROSSLINKED RESIN MOLDED PRODUCT, AND ELECTRICAL WIRE**

(57)    Provided are a silane crosslinkable resin composition containing at least one kind of silanol condensation catalyst represented by a specific formula and having a mass reduction rate of less than 10.0% when heated at 100°C for 30 minutes, and not containing a tin-containing silanol condensation catalyst, and a silane crosslinked resin formed body and an electric wire using the silane crosslinkable resin composition.

**EP 4 692 244 A1**

**Description**

FIELD OF THE INVENTION

The present invention relates to a silane crosslinkable resin composition, a silane crosslinked resin formed body, and an electric wire.

BACKGROUND OF THE INVENTION

Wiring materials such as insulated wires, cables, cords, optical fiber core wires, or optical fiber cords (optical fiber cables) used in electric or electronic devices or automobiles each have a tubular-shaped formed body formed of a crosslinked resin, as an insulating coating layer (also simply referred to as "coating layer"), on an outer periphery of a conductor or the like. Among crosslinked resins, in particular, a silane crosslinked resin is crosslinked and cured by a silane crosslinking method capable of easily crosslinking a silane crosslinkable resin composition with high productivity without requiring specially equipped facility, and thus is widely used as a material of a coating layer of an electric wire.
In the silane crosslinking method, a silanol condensation reaction is performed as a final crosslinking reaction. As a silanol condensation catalyst that causes or accelerates this condensation reaction, various compounds can be used. Among the compounds, an organic tin compound having high catalytic activity and capable of realizing an adequate crosslinking rate and crosslinking density is frequently used.
This organic tin compound may exhibit an environmental hormone action, and there is a concern about safety.
Accordingly, conversion to a silanol condensation catalyst not containing tin has been studied. Examples thereof include organic sulfonic acid and zinc carboxylate. Further, Patent Literature 1 recites, specifically, so-called organic carboxylic acid metal salts such as zinc laurate, zinc octylate, zinc stearate, aluminum adipate, aluminum laurate, and calcium adipate as "organometallic compounds other than the organic tin compound". Furthermore, Patent Literature 2 specifically recites "acetyl acetone aluminum, aluminum lactate, aluminum stearate tri, hydroxyaluminum bis(2-ethylhexanoate), aluminum glycinate" as a "silanol condensation catalyst characterized by containing an organic aluminum compound".
However, organic sulfonic acid, zinc carboxylate, and the like generate odor such as pungent odor during a crosslinking reaction, for example, during producing a silane crosslinked resin formed body, and there are problems in terms of environmental load and worker safety. Furthermore, the silanol condensation catalyst is decomposed under high temperature conditions to increase the reaction rate (crosslinking rate) of the silanol condensation reaction, which leads to occurrence of problems of appearance defects and appearance deterioration such as generation of lumps on the surface of the formed body. Meanwhile, the reaction rate (crosslinking rate) of the silanol condensation reaction is slow, which leads to a problem of reduction in the crosslinking density immediately after production. Therefore, in the case of using a silanol condensation catalyst that may generate odor, it is necessary to perform the production process at a low temperature in order to suppress generation of odor and to further suppress an excessive increase in the crosslinking rate. The suppression of generation of odor and the suppression of an increase in the crosslinking rate, and the crosslinking density (suppression of a decrease in the crosslinking rate) have a trade-off relationship, which leads to problems of the manufacturability and the crosslinking rate. Such problems of the manufacturability and crosslinking rate are not studied at all in Patent Literatures 1 and 2.

CITATION LIST

PATENT LITERATURE

Patent Literature 1: JP-A-2002-146150 ("JP-A" means an unexamined published Japanese patent application)
Patent Literature 2: JP-A-2014-193944

SUMMARY OF THE INVENTION

TECHNICAL PROBLEM

The present invention provides a silane crosslinkable resin composition capable of causing a crosslinking reaction to progress at an adequate (moderate) crosslinking rate while suppressing generation of odor upon using a silanol condensation catalyst free of the problem of environmental hormones, and capable of producing a silane crosslinked resin formed body having excellent appearance and high crosslinking density. Further, the present invention provides a silane crosslinked resin formed body and an electric wire using the silane crosslinkable resin composition.

SOLUTION TO PROBLEM

The present inventors have conducted intensive studies on a silane crosslinkable resin composition, and found that when a silanol condensation catalyst that has a specific chemical structure represented by Formula (1) described later and has a mass reduction rate of less than 10.0 mass% under conditions described later is used as a silanol condensation catalyst, for example, generation of odor can be suppressed during production of a silane crosslinked resin formed body, particularly during melt-mixing. Furthermore, a silanol condensation reaction can be allowed to progress at an adequate crosslinking rate, and as a result, a silane crosslinked resin formed body having excellent appearance and high crosslinking density can be produced with excellent manufacturability. The present inventors have made a great deal of consideration based on these findings and finally completed the present invention.

That is, the above-described problems of the present invention are solved by the following means.

<1> A silane crosslinkable resin composition containing at least one kind of silanol condensation catalyst represented by the following Formula (1) and having a mass reduction rate of less than 10.0% when heated at 100°C for 30 minutes, and not containing a tin-containing silanol condensation catalyst:

$$\text{Formula (1):} \qquad M(R_1)_a(R_2)_b$$

Wherein, in the Formula (1), M represents aluminum, titanium, zirconium, or zinc,
$R_1$ represents a ligand having at least one of an alkyl group, a carbonyl group, a carboxy group, a hydroxy group, an alkoxy group, an aryl group, an alkylcarbonyloxy group, or an arylcarbonyloxy group,
$R_2$ represents an alkyl or arylcarbonyloxy group, or a nitrogen-free substituent, a is an integer of 1 to 4, and b is an integer of 0 to 3.

<2> The silane crosslinkable resin composition according to <1>, wherein the $R_1$ represents acetylacetone, ethyl acetoacetate, or a conjugate base thereof.
<3> The silane crosslinkable resin composition according to <1> or <2>, wherein the M is aluminum, zirconium, or zinc.
<4> The silane crosslinkable resin composition according to any one of <1> to <3>, containing a base resin, wherein the base resin contains a polyolefin resin.
<5> The silane crosslinkable resin composition according to any one of <1> to <4>, containing a base resin, wherein a content of the silanol condensation catalyst with respect to 100 parts by mass of the base resin is 0.01 parts by mass to 1 part by mass.
<6> The silane crosslinkable resin composition according to any one of <1> to <5>, containing a base resin, wherein 0.5 to 400 parts by mass of an inorganic filler is contained with respect to 100 parts by mass of the base resin.
<7> A silane crosslinked resin formed body of the silane crosslinkable resin composition described in any one of <1> to <6>.
<8> An electric wire including the silane crosslinked resin formed body described in <7> as a coating layer.

ADVANTAGEOUS EFFECTS OF INVENTION

The present invention can provide a silane crosslinkable resin composition capable of causing a crosslinking reaction to progress at an adequate crosslinking rate while suppressing generation of odor upon using a silanol condensation catalyst free of the problem of environmental hormones, and capable of producing a silane crosslinked resin formed body having excellent appearance and high crosslinking density. In addition, the present invention can provide a silane crosslinked resin formed body and an electric wire using the silane crosslinkable resin composition.

Other and further features and advantages of the present invention will appear more fully from the following description.

DESCRIPTION OF EMBODIMENTS

In the present invention, in a case where the content, physical properties, and the like of components are described by referring to numerical ranges, when the upper limit and the lower limit of a numerical range is separately described, any of the upper limits thereof and any of the lower limit thereof can be appropriately combined to set a specific numerical range. Meanwhile, in the present invention, the numerical ranges expressed with the term "to" refer to ranges including, as the lower limit and the upper limit, the numerical values before and after the term "to". In the present invention, when a plurality of numerical ranges is set and described, the upper limit and the lower limit forming a numerical range are not limited to a specific combination described before and after the term "to" as a specific numerical range, and may be a numerical range in which the upper limit and the lower limit of each of the numerical ranges are appropriately combined.

[Silane crosslinkable resin composition]

The silane crosslinkable resin composition of the present invention (hereinafter, may be simply referred to as "crosslinkable composition of the present invention") contains at least one kind silanol condensation catalyst represented by Formula (1) described later and having a mass reduction rate of less than 10.0% when heated at 100°C for 30 minutes.

Meanwhile, the crosslinkable composition of the present invention does not contain a tin-containing silanol condensation catalyst. Here, the tin-containing silanol condensation catalyst refers to an organic tin compound that functions as a catalyst for a silanol condensation reaction among organic tin compounds containing a tin element as a constituent element, and examples thereof include various known organic tin compounds. Examples thereof include dibutyltin dilaurate, dioctyltin dilaurate, dibutyltin dioctylate, and dibutyltin diacetate. In the present invention, the phrase "the silane crosslinkable resin composition does not contain a tin-containing silanol condensation catalyst" means that a tin-containing silanol condensation catalyst is not actively contained in or mixed with the silane crosslinkable resin composition, and does not exclude that a tin-containing silanol condensation catalyst is unavoidably contained or mixed. For example, the crosslinkable composition of the present invention may contain 0.001 parts by mass or less of the tin-containing silanol condensation catalyst with respect to 100 parts by mass of the base resin.

The crosslinkable composition of the present invention contains at least one kind of silanol condensation catalyst represented by the following Formula (1) and having a mass reduction rate of less than 10.0% when heated at 100°C for 30 minutes. This silanol condensation catalyst is contained, as a result of which the crosslinkable composition of the present invention can progress a crosslinking reaction at an adequate crosslinking rate while suppressing generation of odor. As a result, a silane crosslinked resin formed body having excellent appearance and high crosslinking density can be produced with excellent manufacturability. The number of the silanol condensation catalysts contained in the crosslinkable composition of the present invention is preferably 1 to 2.

In the present invention, whether the "crosslinking rate" is adequate cannot be uniquely determined by the content of the silanol condensation catalyst, the conditions of contact with water, and the like. Whether or not the crosslinking rate is adequate can be judged and evaluated by maintaining the catalytic activity of the silanol condensation catalyst and, for example, passing an appearance characteristic test and a crosslinking density test (heating deformation ratio) described in Examples described later.

<Silanol condensation catalyst represented by Formula (1)>

The silanol condensation catalyst contained in the crosslinkable composition of the present invention is represented by the following Formula (1), and is ordinarily a compound that does not correspond to the environmental hormones (endocrine disruptors):

$$\text{Formula (1):} \qquad M(R_1)_a(R_2)_b$$

In Formula (1), M represents a metal species, and specifically represents aluminum, titanium, zirconium, or zinc. Among the metal species, aluminum, zirconium, and zinc are preferable from the viewpoint of the crosslinking rate.

$R_1$ represents a ligand having at least one of an alkyl group, a carbonyl group, a carboxy group, a hydroxy group, an alkoxy group, an aryl group, an alkylcarbonyloxy group, or an arylcarbonyloxy group,

In the present invention, the term "ligand having a specific group" encompasses a ligand composed only of a specific group and a ligand composed of a specific group and a group other than the specific group, and an atom or a structure. For example, the term "ligand having an alkylcarbonyloxy group" encompasses a ligand composed only of an alkylcarbonyloxy group, a β-ketoester compound composed of an alkylcarbonyloxy group and another group, and the like.

The group included in the ligand may be in the form of an ion, a conjugate base, or the like as long as it is coordinated to metal species M. The ligand that can be taken as $R_1$ preferably has one to three kinds of the groups described above, and preferably has one or two kinds of the groups.

Among the above-described groups, a ligand having at least one of an alkyl group, a carbonyl group, an alkoxy group, or an arylcarbonyloxy group is preferable as the ligand that can be taken as $R_1$. The substituent formed by combining two kinds or more of the groups is not particularly limited, and examples thereof include a combination of an alkyl group and a carbonyl group (alkylcarbonyl group), and a combination of an aryl group and a carbonyl group (arylcarbonyl group).

Examples of the ligand that can be taken as $R_1$ include a ligand having an alkylcarbonyl group and an alkylcarbonyloxy group (e.g. a ketoester compound), and a ligand having two alkylcarbonyl groups (e.g. a diketone compound).

In the ligand that can be taken as $R_1$, the alkyl group that the ligand may have is not particularly limited, and may be linear, branched, and cyclic, and is preferably linear or branched. The number of carbon atoms in the alkylene group is not particularly limited, and is, for example, preferably 1 to 40, more preferably 1 to 20, still more preferably 1 to 10, and particularly preferably 1 to 5.

In the ligand that can be taken as $R_1$, the alkoxy group that the ligand may have is not particularly limited, and is, for example, an alkyloxy group in which an oxygen atom is bonded to the end of the alkyl group that the ligand may have and the ligand can be taken as $R_1$. However, the number of carbon atoms in the alkyl group included in the alkoxy group is preferably 1 to 24 and more preferably 1 to 20 within the above range.

In the ligand that can be taken as $R_1$, the aryl group that the ligand may have is not particularly limited, and may be a monocyclic aryl group or a polycyclic aryl group. The number of carbon atoms in the aryl group is not particularly limited, and is, for example, preferably 6 to 40, more preferably 6 to 20, and more preferably 6 to 10.

In the ligand that can be taken as $R_1$, the alkylcarbonyloxy group that the ligand may have is not particularly limited, and is, for example, a group in which a carbonyloxy group is bonded to the end of the alkyl group that the ligand may have and the ligand can be taken as $R_1$ (alkyl-COO-group).

In the ligand that can be taken as $R_1$, the arylcarbonyloxy group that the ligand may have is not particularly limited, and is, for example, a group in which a carbonyloxy group is bonded to the end of the aryl group that the ligand may have and the ligand can be taken as $R_1$ (aryl-COO-group).

Examples of the ligand that can be taken as $R_1$ include a diketone compound such as acetylacetone and a β-ketoester compound such as ethyl acetoacetate.

Examples of the diketone compound that can be taken as $R_1$ include, but not particularly limited to, a 1,3-diketone compound and a 1,4-diketone compound. From the viewpoint that the silanol condensation catalyst has high stability and the mass reduction rate described later can be reduced, a 1,3-diketone compound is preferable.

The 1,3-diketone compound is represented by $R^A\text{-CO-C}(R^B)_2\text{-CO-}R^C$. Examples of $R^A$ and $R^C$ each include an alkyl group, an aryl group, an alkoxy group, a carbonyl group, a carboxy group, and a ketone group, and an alkyl group is preferable. The number of carbon atoms in the alkyl group is preferably 1 to 10, more preferably 1 to 5. $R^A$ and $R^C$ may be identical to or different from each other. The alkyl, aryl, and alkoxy groups that can be taken as $R^A$ and $R^C$ are identical to the alkyl, aryl, and alkoxy groups that the ligand may have and the ligand can be taken as $R_1$, respectively. The ketone group that can be taken as $R^A$ and $R^C$ is, for example, a group represented by -CO-R. Here, R is not particularly limited, and examples thereof include an alkyl group and an aryl group. The alkyl and aryl groups that can be taken as R are not particularly limited, and are identical to the alkyl and aryl groups that can be taken as $R^A$ and $R^C$, respectively.

Examples of $R^B$ include a hydrogen atom, or an alkyl group, an aryl group, an alkoxy group, a carbonyl group, a carboxy group, a ketone group, and an alkylcarbonyl group, and a hydrogen atom is preferable. Two $R^B$s may be identical to or different from each other, and are each preferably a hydrogen atom.

As the 1,3-diketone compound, a compound in which both $R^A$ and $R^C$ are alkyl groups is preferable. For example, acetylacetone in which both $R^A$ and $R^C$ are methyl groups, and the like are preferable.

The 1,4-diketone compound is represented by $R^A\text{-CO-C}(R^D)_2\text{-C}(R^E)_2\text{-CO}R^C$. $R^A$ and $R^C$ are synonymous with $R^A$ and $R^C$ of the 1,3-diketone compound. $R^D$ and $R^E$ are each synonymous with $R^B$ of the 1,3-diketone compound, and are each preferably a hydrogen atom or an alkylcarbonyl group. $R^D$ and $R^E$ may be identical to or different from each other, and are each preferably a hydrogen atom.

As the 1,4-diketone compound, a compound in which both $R^A$ and $R^C$ are alkyl groups is preferable. Examples thereof include 2,5-hexanedione (also referred to as "acetonylacetone"), and 3,4-diacetyl-2,5-hexanedione.

The β-ketoester compound that can be taken as $R_1$ is not particularly limited, and a β-ketoester compound represented by $R^F\text{-CO-C}(R^B)_2\text{-COO-}R^G$ is preferable.

$R^F$ is synonymous with $R^A$ of the 1,3-diketone compound. $R^B$ is synonymous with $R^B$ of the 1,3-diketone compound. Examples of $R^G$ include an alkyl group, an aryl group, an alkoxy group, a carbonyl group, a carboxy group, and a ketone group, and an alkyl group is preferable.

The alkyl, aryl, and alkoxy groups that can be taken as $R^G$ are identical to the alkyl, aryl, and alkoxy groups that the ligand may have and the ligand can be taken as $R_1$, respectively. However, the number of carbon atoms of the alkyl group that can be taken as $R^G$ is preferably 1 to 40, more preferably 1 to 30, still more preferably 1 to 25, and particularly preferably 1 to 20. The ketone group that can be taken as $R^G$ is identical to the ketone group that can be taken as $R^A$ and $R^C$.

As the β-ketoester, a compound in which both $R^F$ and $R^G$ are alkyl groups is preferable, and examples thereof include methyl acetoacetate (methyl acetoacetate), ethyl acetoacetate (ethyl acetoacetate), methyl pivaloylacetate, methyl isobutyroylacetate, ethyl benzoylacetate, ethyl p-anisoylacetate, methyl caproylacetate, methyl lauroylacetate, and methyl palmitoylacetate.

Examples of the conjugate base of the diketone compound and the β-ketoester compound include compounds obtained by removing one hydrogen atom from the diketone compound or the β-ketoester compound described above Ordinarily, compounds obtained by removing one hydrogen atom that can be taken as $R^B$, $R^D$, or $R^E$ in each of the chemical formulas described above are preferable.

Examples of the ligand (conjugate base thereof) having at least one of an alkyl group, a carbonyl group, a carboxy group, a hydroxy group, an alkoxy group, an aryl group, an alkyloxy group, or an arylcarbonyloxy group that can be taken as $R_1$ include alcohol compounds having an alkoxy group such as methoxy, isopropoxy, n-butoxy, n-propoxy, 2-ethylhexoxy, and stearyloxy; carboxylic acid compounds such as adipic acid, lactic acid, and stearic acid; dodecylbenzenesulfonic acid, octylene glycol, octanol, phosphoric acid esters, various ethers, and phenols, in addition to the above-described diketone compound and β-ketoester compound.

$R_1$ is preferably acetylacetone, ethyl acetoacetate, or a conjugate base thereof, from the viewpoint that the crosslinking rate (catalytic activity of the silanol condensation catalyst) can be adjusted to an adequate rate, and both appearance and crosslinking density can be achieved at a high level.

$R_1$ in Formula (1) may be bonded to M as a monodentate ligand or may be bonded to M as a bidentate ligand in the silanol condensation catalyst represented by Formula (1).

$R_2$ in Formula (1) is a substituent bonded to a metal atom M in Formula (1) by a chemical bond (ordinarily, a covalent bond and an ionic bond) other than a coordination bond, and also represents an alkyl or arylcarbonyloxy group, or a nitrogen-free substituent.

The alkylcarbonyloxy group that can be taken as $R_2$ is not particularly limited as long as it is an anion of an aliphatic carboxylic acid. Examples thereof include an alkylcarbonyloxy group with 2 to 40 total carbon atoms including carbon atoms of a carbonyl group, and an alkylcarbonyloxy group with 2 to 20 total carbon atoms is preferable. Examples of the alkylcarbonyloxy group include an anion of stearic acid.

The arylcarbonyloxy group that can be taken as $R_2$ is not particularly limited as long as it is an anion of an aromatic carboxylic acid. Examples thereof include an arylcarbonyloxy group with 7 to 40 total carbon atoms including carbon atoms of a carbonyl group, and an arylcarbonyloxy group with 7 to 20 total carbon atoms is preferable.

The nitrogen-free group that can be taken as $R_2$ is not particularly limited, and an appropriate group can be employed.

$R_2$ in Formula (1) is ordinarily bonded to M at one bonding portion in the silanol condensation catalyst represented by Formula (1), but the present invention is not limited thereto.

In Formula (1), a is an integer of 1 to 4, preferably an integer of 2 to 4.

b is an integer of 0 to 3, preferably 1 or 2.

However, a + b is an integer of 8 or less, preferably an integer of 1 to 4.

As the silanol condensation catalyst represented by Formula (1), a silanol condensation catalyst in which M is aluminum or zirconium and $R_1$ is acetylacetone, ethyl acetoacetate, or a conjugate base thereof is preferable, and when a is 1 or more, a silanol condensation catalyst in which b is 0 is more preferable, from the viewpoint of maintaining an adequate crosslinking rate (catalytic activity of the silanol condensation catalyst) and achieving excellent appearance and high crosslinking density.

Examples of the silanol condensation catalyst represented by Formula (1) include zirconium acetylacetonate, zinc acetylacetonate, aluminum tris(ethyl acetoacetate), acetylacetonate aluminum bis(ethyl acetyl acetoacetate), titanium tetraacetylacetonate, aluminum bisethylacetoacetate monoacetylacetonate, and aluminum tris(acetoacetate).

The silanol condensation catalyst contained in the crosslinkable composition of the present invention has a mass reduction rate of less than 10.0% when heated at 100°C for 30 minutes. Specifically, the mass reduction rate before and after heating in the method of measuring a mass reduction rate described in Examples is less than 10.0 mass%. The mass reduction rate has been devised as one of indices for evaluating the thermal stability (thermal decomposability) of a silanol condensation catalyst and the generation of odor by finding that many compounds causing odor have a boiling point or a decomposition temperature of 100°C or lower at 1 atm. The silanol condensation catalyst represented by Formula (1) has a mass reduction rate of less than 10.0 mass%, whereby the generation of odor can be suppressed without lowering the crosslinking rate (catalytic activity of the silanol condensation catalyst).

In the present invention, the mass reduction rate of the silanol condensation catalyst is preferably 5.0 mass% or less from the viewpoint of highly suppressing generation of odor. The lower limit value of the mass reduction rate is ideally 0 mass%, but is practically 0.0001 mass% or more.

As will be described later, the crosslinkable composition of the present invention can progress a crosslinking reaction at an adequate crosslinking rate while suppressing generation of odor upon containing the silanol condensation catalyst free of the problem of environmental hormones, and capable of producing a silane crosslinked resin formed body exhibiting excellent appearance and high crosslinking density.

Hereinafter, each component (the silanol condensation catalyst is excluded) to be used in the present invention will be explained.

One kind or two or more kinds of each component can be used.

In the present invention and the present specification, when simply referred to as a "resin", it is intended to mean a resin to which a silane coupling agent is not graft-bonded. Meanwhile, a resin to which a silane coupling agent is graft-bonded may be referred to as "silane crosslinkable resin", "a silane graft resin", or the like.

In addition, the term "(co)polymer" is used in the sense of including a resin or rubber of the (co)polymer.

<Resin having silane crosslinkability>

The crosslinkable composition of the present invention contains a resin exhibiting silane crosslinkability.

The resin exhibiting silane crosslinkability is not particularly limited, and examples thereof include both the form of a composition (mixture) containing a base resin as a base of the crosslinkable composition and a silane coupling agent (in an unreacted state) and the form of a silane crosslinkable resin to which a silane coupling agent is graft-bonded.

In the form of a composition as the resin exhibiting silane crosslinkability, it is preferable to include a base resin and a silane coupling agent, and further include an organic peroxide.

The silane crosslinkable resin is a resin which is formed of a silane coupling agent and a base resin described later and in which the silane coupling agent is graft-bonded to the base resin. In this silane crosslinkable resin, the grafting reaction amount of the silane coupling agent is not particularly limited. Ordinarily, the grafting reaction amount may be any amount obtained by reacting the silane coupling agent with the base resin in the composition amount described later in the form of a composition.

As the silane crosslinkable resin, one synthesized by a method described later may be used, or a commercially available product may be used. The silane crosslinkable resin is obtained by reacting a base resin described later with a silane coupling agent described later at a temperature equal to or higher than a decomposition temperature of an organic peroxide described later. Specific reaction conditions are not particularly limited, and suitable examples thereof include the melt-mixing conditions in the step (1) or the step (a) described later after the content of the organic peroxide is set to the range described later. The commercially available product of the silane crosslinkable resin is, for example, Linklon (trade name: manufactured by Mitsubishi Chemical Corporation) or the like.

(Base resin)

The base resin that forms the silane graft resin and the base resin (base resin before being graft-reacted with the silane coupling agent) used in the form of a composition are not particularly limited. Examples thereof include resins composed of various (co)polymers, and a preferable example is a polyolefin resin.

-Polyolefin resin-

The polyolefin resin is not particularly limited as long as it is a resin formed of a polymer obtained by polymerizing or copolymerizing a compound having an ethylenically unsaturated bond, and known resins used for conventional resin compositions can be used. The polyolefin resin has a grafting reaction site (e.g. an unsaturated bond site of the carbon chain or a carbon atom having a hydrogen atom) capable of being graft-reacted with a grafting reaction site of the silane coupling agent. Examples of the polyolefin resin include resins such as polyethylene (PE), polypropylene (PP), an ethylene-$\alpha$-olefin copolymer, and a polyolefin resin copolymer having an acid copolymerized component or an acid ester copolymerized component, and a styrene-based elastomer.

The polyethylene is not particularly limited as long as it is a resin of a polymer having an ethylene component as a main component. Examples thereof include high-density polyethylene (HDPE), low-density polyethylene (LDPE), ultrahigh molecular weight polyethylene (UHMW-PE), linear low-density polyethylene (LLDPE), and very low density polyethylene (VLDPE).

The polypropylene is not particularly limited as long as it is a resin of a polymer having a propylene component as a main component. Examples thereof include random polypropylene and block polypropylene resins, in addition to a homopolymer of propylene.

Examples of the ethylene-$\alpha$-olefin copolymer preferably include a copolymer of ethylene and $\alpha$-olefin with 3 to 12 carbon atoms (however, those included in the above-mentioned polyethylene and polypropylene are excluded). Examples thereof include an ethylene-propylene copolymer (however, those included in polypropylene are excluded), an ethylene-butylene copolymer, and an ethylene-$\alpha$-olefin copolymer synthesized in the presence of a single-site catalyst.

Further, the rubber of the ethylene-$\alpha$-olefin copolymer encompasses an ethylene-propylene-diene rubber (EPDM) as a ternary copolymer rubber of a conjugated diene compound or a non-conjugated diene compound, in addition to a binary copolymer rubber of ethylene-propylene rubber (EPM).

The compound that leads an acid copolymerized component or an acid ester copolymerized component in the resin of the polyolefin resin copolymer having the acid copolymerized component or the acid ester copolymerized component is not particularly limited, and examples thereof include carboxylic acid compounds such as (meth)acrylic acid, and acid ester compounds such as vinyl acetate and (meth)acrylic acid ester. The (meth)acrylic acid ester is not particularly limited, and examples thereof include alkyl (meth)acrylate. The alkyl group of the alkyl (meth)acrylate is preferably one with 1 to 12 carbon atoms.

Examples of the polyolefin resin copolymer having an acid copolymerized component or an acid ester copolymerized component is not particularly limited, and examples thereof include an ethylene-vinyl acetate copolymer (EVA), an ethylene-methyl acrylate copolymer (EMA), an ethylene-ethyl acrylate copolymer (EEA), and an ethylene-butyl acrylate copolymer (EBA).

The styrene-based elastomer refers to an elastomer including a polymer having a constituent derived from an aromatic vinyl compound in a molecule. Examples of the styrene-based elastomer include block and random copolymers of a conjugated diene compound and an aromatic vinyl compound, or hydrogenated products thereof. Specific examples thereof include styrene-ethylene-butylene-styrene block copolymer (SEBS), styrene-isoprene-styrene block copolymer (SIS), hydrogenated SIS, styrene-butadiene-styrene block copolymer (SBS), hydrogenated SBS, styrene-ethylene-ethylene-propylene-styrene block copolymer (SEEPS), styrene-ethylene-propylene-styrene block copolymer (SEPS), styrene-butadiene rubber (SBR), hydrogenated styrene-butadiene rubber (HSBR), and hydrogenated acrylonitrile-butadiene rubber (HNBR).

The polyolefin resin may be acid-modified with an unsaturated carboxylic acid compound such as (anhydrous) maleic acid.

The polyolefin resin may contain various oils to be used as a plasticizer or a softener as desired. Such an oil is for example, an oil used as a plasticizer for polyolefin resin or a mineral oil softener for rubber. As the oil, an aromatic oil, a paraffin oil, or a naphthene oil is suitably used.

-Composition of polyolefin resin-

The polyolefin resin may contain a specific resin alone or may contain a plurality of resins. In the present invention, the polyolefin resin may contain only polyethylene, and preferably contains polyethylene, a styrene-based elastomer, and oil from the viewpoint that the effect of improving the mechanical characteristics is enhanced by improving the crosslinking density.

When the polyolefin resin contains a plurality of resins, the resins or oils may be contained at a content rate of 100 mass% in total, and the content rate is appropriately set according to the physical properties, use, and the like of the silane crosslinked resin formed body. For example, the content rate of polyethylene in 100 mass% of the polyolefin resin is preferably 5 to 100 mass%, more preferably 10 to 80 mass%, and particularly preferably 15 to 70 mass%. The content rate of the styrene-based elastomer in 100 mass% of the polyolefin resin is preferably 5 to 70 mass%, more preferably 10 to 40 mass%, and still more preferably 10 to 35 mass%. The content rate of the oil in 100 mass% of the polyolefin resin is preferably 0 to 40 mass%, and more preferably 5 to 25 mass%.

-Silane coupling agent-

The silane coupling agent that forms the silane crosslinkable resin (before the grafting reaction) and the silane coupling agent when used in the form of a composition are not particularly limited, as long as they have a grafting reaction site (group or atom) capable of being graft-reacted with a grafting reaction site of the base resin in the presence of radicals generated by the decomposition of the organic peroxide, and further have a hydrolyzable silyl group as a silanol condensable reaction site. Examples of the silane coupling agent include silane coupling agents which have been used in the conventional silane crosslinking method. Among the silane coupling agents, a silane coupling agent having a vinyl group and an alkoxysilyl group at the end is preferable. Examples of such a silane coupling agent include vinylalkoxysilane such as vinyltrimethoxysilane, vinyltriethoxysilane, vinyltributoxysilane, vinyldimethoxyethoxysilane, vinyldimethoxybutoxysilane, vinyldiethoxybutoxysilane, allyltrimethoxysilane, allyltriethoxysilane, and vinyltriacetoxysilane; and (meth) acryloxysilane such as methacryloxypropyltrimethoxysilane, methacryloxypropyltriethoxysilane, and methacryloxypropylmethyldimethoxysilane. Among these silane coupling agents, vinyltrimethoxysilane or vinyltriethoxysilane is particularly preferable.

The silane coupling agent that forms the silane graft resin may be used singly or in combination of two or more kinds thereof.

-Organic peroxide-

When the silane crosslinkable resin is synthesized, an organic peroxide is preferably used. Also, when the silane crosslinkable resin is used as a base resin in the form of a composition, an organic peroxide is preferably contained. The organic peroxide functions to cause a grafting reaction by a radical reaction between the silane coupling agent and the base resin by generating radicals at least during thermal decomposition. Such an organic peroxide is not particularly limited as long as it generates radicals, and for example, compounds represented by general formulas: $R^{1A}\text{-OO-}R^{2A}$, $R^{3A}\text{-OO-C(=O)}R^{4A}$, and $R^{5A}C(=O)\text{-OO(C=O)}R^{6A}$ are preferable. Here, $R^{1A}$ to $R^{6A}$ each independently represent an alkyl group, an aryl group, or an acyl group. Among $R^{1A}$ to $R^{6A}$ of each of the compounds, a compound in which all of $R^{1A}$ to $R^{6A}$

are alkyl groups or a compound in which any one of $R^{1A}$ to $R^{6A}$ is an alkyl group and the rest is an acyl group is preferable.

As the decomposition temperature measured by the method described in JP-A-2016-121203, the decomposition temperature of the organic peroxide is preferably 80 to 195°C and particularly preferably 125 to 180°C

Examples of such an organic peroxide include an organic peroxide described in paragraph [0036] of JP-A-2016-121203, the contents of which are incorporated herein by reference. Among the organic peroxides, dicumyl peroxide, 2,5-dimethyl-2,5-di-(tert-butylperoxy)hexane (PERHEXA 25B), and 2,5-dimethyl-2,5-di-(tert-butylperoxy)hexyne-3 are preferable.

<Inorganic filler>

The crosslinkable composition of the present invention preferably contains an inorganic filler regardless of the form of the silane crosslinkable resin. In particular, when the silane crosslinkable resin is used in the form of a composition, the coexistence of an inorganic filler makes it possible to suppress volatilization of the silane coupling agent and to suppress a condensation reaction between silane coupling agents. Thus, a silane crosslinked resin formed body having excellent appearance and high strength and crosslinking density can be produced.

The inorganic filler is not particularly limited as long as it is ordinarily used. However, preferred are those having, on their surfaces, a site that can be chemically bonded by a hydrogen bond or a covalent bond and the like, or an intermolecular bond with a silanol condensable reaction site of the silane coupling agent. The site that can be chemically bonded with the silanol condensable reaction site of the silane coupling agent is not particularly limited, and examples thereof include an OH group (OH group of hydroxyl group, of water molecule in hydrous substance or crystallized water, or of carboxyl group), amino group, and an SH group.

Such an inorganic filler is allowed to coexist during the silane grafting reaction, as a result of which it is possible to form a silane graft resin in which a silane coupling agent weakly bonded to the inorganic filler undergoes a grafting reaction and a silane graft resin in which a silane coupling agent strongly bonded to the inorganic filler undergoes a grafting reaction. Subjecting these two kinds of silane graft resins to a crosslinking reaction makes it possible to form a silane crosslinked resin formed body exhibiting a high crosslinking density (such as heat resistance or strength). Here, the weak bonding to the inorganic filler includes mutual action caused by hydrogen bonding, mutual action between ions, partial charges, or dipoles, action caused by adsorption, and the like. Further, the strong bonding to the inorganic filler includes chemical bonding to a site capable of being chemically bonded to the surface of the inorganic filler, and the like.

Examples of the inorganic filler include those ordinarily used in the resin composition, and examples thereof include metal hydrate, such as a compound having a hydroxyl group or crystallized water, for example, aluminum hydroxide, magnesium hydroxide, boehmite, calcium carbonate, magnesium carbonate, calcium silicate, magnesium silicate, calcium oxide, magnesium oxide, aluminum oxide, aluminum nitride, aluminum borate whisker, hydrated aluminum silicate, hydrated magnesium silicate, basic magnesium carbonate, hydrotalcite, and talc. Further, examples thereof include boron nitride, silica (crystalline silica, amorphous silica, and the like), carbon black, clay (calcined clay), zinc oxide, tin oxide, titanium oxide, molybdenum oxide, antimony trioxide, a silicone compound, quartz, zinc borate, white carbon, zinc borate, zinc hydroxystannate, and zinc stannate. Among the inorganic fillers, aluminum hydroxide or magnesium hydroxide is preferable.

The inorganic fillers is preferably in the form of particles, and an average particle diameter thereof is preferably 0.2 to 10 μm, more preferably 0.3 to 8 μm, still more preferably 0.4 to 5 μm, and particularly preferably 0.4 to 3 μm. The average particle diameter is obtained by dispersing the inorganic filler in alcohol or water, and then measuring using an optical particle diameter measuring device, such as a laser diffraction/scattering particle diameter distribution measuring device.

As the inorganic filler, an inorganic filler surface-treated with various surface treatment agents can also be used.

The inorganic filler may be used singly, or in combination of two or more kinds thereof.

<Additive>

The crosslinkable composition of the present invention may contain various additives ordinarily used for resin compositions. Examples of such an additive include an antioxidant, a lubricant, a metal inactivator, a plasticizer, a flame retardant, a flame retardant aid, and (co)polymers other than those described for the base resin.

(Composition of silane crosslinkable resin composition)

The content of the silanol condensation catalyst in the silane crosslinkable resin composition is not particularly limited, and can be appropriately set. For example, the content may be 0.005 to 2 parts by mass with respect to 100 parts by mass of the base resin (i.e. the base resin before being graft-reacted with the silane coupling agent), and is preferably 0.01 to 1 part by mass, more preferably 0.03 to 0.5 parts by mass, and still more preferably 0.05 to 0.5 parts by mass from the viewpoint that the crosslinking reaction can progress at an adequate crosslinking rate while suppressing generation of odor.

The content of the silane coupling agent in the silane crosslinkable resin composition is not particularly limited, and is preferably 1 to 15 parts by mass, more preferably 2 to 15 parts by mass, still more preferably 3 to 15 parts by mass, and particularly preferably 3 to 8 parts by mass, with respect to 100 parts by mass of the polyolefin resin, from the viewpoint of being able to produce the silane crosslinked resin formed body having excellent appearance and sufficient crosslinking density while suppressing generation of protruding aggregates (gel lumps) caused by a crosslinked gel or the like, volatilization of the silane coupling agent, and the like. Here, in the case of the silane crosslinkable resin, the content of the silane coupling agent is, for convenience, a content in terms of mass before being graft-reacted with the polyolefin resin (content of the silane coupling agent used in combination with the polyolefin resin).

When the base resin is used in the form of a composition in the silane crosslinkable resin composition, the content of the organic peroxide in the silane crosslinkable resin composition is not particularly limited. The content is preferably 0.01 to 0.6 parts by mass with respect to 100 parts by mass of the base resin, and is preferably 0.1 to 0.2 parts by mass, from the viewpoint that the appearance, crosslinking density and the like of the silane crosslinked resin formed body can be further improved.

The content of the inorganic filler in the silane crosslinkable resin composition is not particularly limited. For example, the content is preferably 0.5 to 400 parts by mass, more preferably 30 to 280 parts by mass, still more preferably 50 to 250 parts by mass, and particularly preferably 50 to 100 parts by mass, with respect to 100 parts by mass of the base resin, from the viewpoint that the appearance of the silane crosslinked resin formed body can be further improved.

The total content of the additive in the silane crosslinkable resin composition is not particularly limited, and can be appropriately set within a range that does not impair the action and effect of the present invention. For example, the content of the antioxidant is not particularly limited, and it is preferably 0.2 to 8 parts by mass with respect to 100 parts by mass of the base resin.

[Silane crosslinked resin formed body]

The silane crosslinked resin formed body of the present invention is a crosslinked resin formed body of the silane crosslinkable resin composition of the present invention described above, and is specifically a crosslinked cured product obtained by forming the silane crosslinkable resin composition of the present invention into a predetermined shape and size, and then bringing the formed body into contact with water to cause a silanol condensation reaction.

The silane crosslinked resin formed body has a crosslinked structure in which the base resin is silane-crosslinked, and an inorganic filler may be incorporated in the crosslinked structure as described later. The crosslinked structure has a crosslinked structure via a silane coupling agent or a silanol condensate thereof, and a structure in which an inorganic filler is incorporated in a part of the crosslinked structure is preferable.

The silane crosslinked resin formed body of the present invention has excellent appearance and high crosslinking density.

Ordinarily, the content of each component in the silane crosslinked resin formed body of the present invention is basically the same as the content of each component in the crosslinkable composition of the present invention. However, the organic peroxide and the silanol condensation catalyst ordinarily decompose and do not exist. The content of the silane coupling agent before the grafting reaction and the silanol condensation reaction, and the content of the base resin before crosslinking are used.

The silane crosslinked resin formed body of the present invention has excellent appearance and high crosslinking density, and can be suitably used for various products (also including semi-finished products, parts, and members). Specific examples thereof include an insulating coating layer (including a sheath) of a wiring material, a molding material, a plug for power supply, a connector, a sleeve, a box, a tape base material, a tube, a sheet, a packing, a gasket, a cushion material, and a vibration-proof material. In particular, the silane crosslinked resin formed body is suitably used as an insulating coating layer of an insulated wire for a vehicle such as an automobile or an electric train, and as a sheath of a cabtyre cable.

[Electric wire]

The electric wire of the present invention has the above-described silane crosslinked resin formed body formed in a tubular shape as an insulating layer covering the outer periphery of a conductor. In the electric wire of the present invention, the coating layer is formed of the silane crosslinked resin formed body exhibiting excellent appearance and high crosslinking density, and thereby the electric wire has excellent appearance without gel lumps or the like, and further has high heat resistance and strength. The term "electric wire of the present invention" means a wiring material used for internal wiring or external wiring of electric or electronic devices, and encompasses insulated wires, cables, cords, optical fiber core wires, or optical fiber cords (optical fiber cables), unless otherwise specified.

The electric wire is the same as an ordinary wiring material used in various electrical- or electronic-equipment fields and industrial fields, except that the coating layer is formed of the silane crosslinked resin formed body of the present invention. Here, when the coating layer of the electric wire is composed of a plurality of layers, at least one of the layers may be formed of the silane crosslinked resin formed body of the present invention. The coating layer formed of the silane crosslinked resin formed body of the present invention is provided directly or through another layer on the outer periphery of the conductor, and the presence or absence of another layer, the material, and the like are appropriately determined according to the type, application, required characteristics, and the like of the electric wire.

As the conductor, an ordinary conductor can be used, and examples thereof include a single wire or a twisted wire (one obtained by vertically attaching or twisting tensile strength fibers) of soft copper, copper alloy or aluminum. Moreover, in addition to a bare wire, a tin-plated conductor or a conductor having an enamel-coating insulation layer can be used. The thickness of the coating layer formed of the silane crosslinked resin formed body of the present invention is not particularly limited, but is ordinarily about 0.15 to 5 mm.

The electric wire of the present invention can be produced by forming the silane crosslinkable resin composition of the present invention into a toroid-shaped (tubular-shaped) layer on the outer periphery of a conductor, and then bringing the layer into contact with water to cause a crosslinking reaction (silanol condensation reaction). Preferably, in the method of producing a silane crosslinked resin formed body of the present invention described later, the electric wire can be produced by setting the forming step (2) to the step of coextrusion forming of the silane crosslinkable resin composition onto the outer periphery of the conductor using a coating device (extruder).

Since the silane crosslinked resin formed body of the present invention exhibits the above-described excellent characteristics, the silane crosslinked resin formed body can be used for various applications other than the coating layer of the electric wire. Examples thereof include applications as substitutes for resin formed bodies such as heat-resistant sheets, heat-resistant films, plugs for power supply, connectors, tubes, and vibration-proof materials.

[Method of producing silane crosslinkable resin composition]

The silane crosslinkable resin composition of the present invention can be prepared by mixing the components described above.

In an aspect in which the silane graft resin is used, the silane crosslinkable resin composition can be prepared by melt-mixing a silane graft resin, a silanol condensation catalyst, and, if appropriate, an inorganic filler and an additive. As the melt-mixing method, conditions, and the like, the method, conditions, and the like in the step (1) or the step (a) described later can be employed.

Meanwhile, in an aspect in which a composition containing a resin and a silane coupling agent is used as the base resin, i.e. in an aspect in which a polyolefin resin is graft-reacted with a silane coupling agent at the time of preparing the silane crosslinkable resin composition, the silane crosslinkable resin composition can be prepared by mixing a base resin, a silane coupling agent, an organic peroxide, a silanol condensation catalyst, if appropriate, an inorganic filler, and an additive. The mixing method (mixing order), mixing conditions, and the like are not particularly limited, and the silane crosslinkable resin composition can be preferably produced in the step (1) of preparing the silane crosslinkable resin composition of the present invention described later.

[Method of producing silane crosslinked resin formed body]

The silane crosslinked resin formed body of the present invention can be produced by forming the silane crosslinkable resin composition of the present invention and then subjecting the formed body to a crosslinking reaction (silanol condensation reaction) (hereinafter, may be referred to as "method of producing a formed body of the present invention"). Preferably, the method is, for example, a production method containing the following steps (1) to (3).

The method of producing a formed body of the present invention can be suitably applied to an aspect in which a composition containing a base resin and a silane coupling agent is used. In an aspect in which a silane graft resin is used, the following steps (2) and (3) can be used for a mixture of a silane graft resin, a silanol condensation catalyst, and, if appropriate, an inorganic filler and the like.

Step (1): a step of obtaining a silane crosslinkable resin composition by melt-mixing a base resin, a silane coupling agent, an organic peroxide, a silanol condensation catalyst, and preferably an inorganic filler.

Step (2): a step of obtaining a formed body by forming the silane crosslinkable resin composition.

Step (3): a step of obtaining a silane crosslinked resin formed body by bringing the formed body and water into contact with each other.

The step (1) can be performed by mixing the components all together, but is preferably performed by the following steps depending on the use mode (blending mode) of the base resin.

That is, in performing the step (1), when all of the base resin is melt-mixed in the following step (a), the step (1) includes the following steps (a) and (c). Meanwhile, when a part of the base resin is melt-mixed in the following step (a-2), the step (1) includes the following steps (a), (b), and (c).

Step (a): A step of preparing a silane masterbatch by melt-mixing all or a part of the base resin, the silane coupling agent, the organic peroxide, and preferably the inorganic filler at a temperature equal to or higher than a decomposition temperature of the organic peroxide.

Step (b): A step of preparing a catalyst masterbatch by melt-mixing a remainder of the base resin, and the silanol condensation catalyst.

Step (c): A step of melt-mixing the silane masterbatch with the silanol condensation catalyst or the catalyst masterbatch.

In the method of producing a formed body of the present invention, the mixing amount of each polymer component used as the base resin is the same as the content rate described above as the composition of the base resin. Further, the mixing amounts of the silane coupling agent, the inorganic filler, the silanol condensation catalyst, and the additive are the same as the contents in the silane crosslinkable resin composition described above.

In the method of producing a formed body of the present invention, 100 parts by mass of the base resin may be contained in the mixture obtained in the step (1). For example, the step (a) includes an aspect in which the whole amount (100 parts by mass) of the base resin is mixed and an aspect in which a part of the base resin is mixed.

When a part of the base resin is mixed in the step (a), the ratio thereof is preferably 60 to 95 mass% and more preferably 70 to 85 mass% with respect to 100 mass% of the base resin mixed in the steps (a) and (b). The remainder (carrier resin) of the base resin to be mixed in the step (b) is appropriately determined according to a part of the base resin to be mixed in the step (a).

When a part of the base resin is mixed in the step (a), the component to be mixed may be one kind or two or more kinds.

When the inorganic filler is used, a part of the inorganic filler can also be used in a step other than the step (a), for example, the step (b). It is preferable to use the whole amount of the inorganic filler in the step (a) because a crosslinked structure (not involving the inorganic filler) between base resins and a crosslinked structure involving the inorganic filler can be constructed in a well-balanced manner. When the inorganic filler is used in the step (b), the amount of the inorganic filler used is not particularly limited, and is appropriately determined.

Various additives may be mixed in either the step (a) or the step (b).

<Step (1)>

In the method of producing a formed body of the present invention, the step (1) of preparing the silane crosslinkable resin composition of the present invention as a mixture by melt-mixing a base resin, a silane coupling agent, an organic peroxide, a silanol condensation catalyst, preferably an inorganic filler, and, if appropriate, an additive, in the above-described mixed amounts is performed.

The step (1), i.e. melt-mixing of the base resin, the silane coupling agent, the inorganic filler, the organic peroxide, and the silanol condensation catalyst, is performed in the following order of steps.

(Step (a))

In the method of producing a formed body of the present invention, the step (a) of preparing a silane masterbatch (silane MB) is performed by melt-mixing all or a part of a base resin, a silane coupling agent, an organic peroxide, preferably an inorganic filler, and, if appropriate, an additive, in the above-described mixed amounts at a temperature equal to or higher than the decomposition temperature of the organic peroxide.

In the step (a), the mixing temperature at which the above-described components are melt-mixed (also referred to as melt-kneaded) is equal to or higher than the decomposition temperature of the organic peroxide, preferably a temperature of the decomposition temperature of the organic peroxide plus (25 to 110)°C, more preferably 150 to 230°C, and still more preferably 175 to 210°C. Here, the decomposition temperature of the organic peroxide as a reference of the melt-mixing temperature is a temperature under an ordinary pressure (about 0.1 MPa) environment. Mixing conditions, such as, a mixing time can be appropriately set. For example, the mixing time can be 1 to 25 minutes, and is preferably 3 to 20 minutes. Melt-mixing is performed at a temperature equal to or higher than the decomposition temperature of the organic peroxide, and thus the organic peroxide is thermally decomposed to generate radicals, and thereby the grafting reaction progresses.

A mixing method is not particularly limited, as long as the mixing method is a method ordinarily used in mixing rubber, plastic or the like. As a mixing device, for example, a single screw extruder, a twin screw extruder, a roll, a Banbury mixer, various kneaders, or the like is used, and a sealed mixer such as a Banbury mixer or various kneaders is preferable.

A method of mixing the base resin is also not particularly limited. For example, the base resin may be prepared in advance and used, or each component may be separately used.

In the present invention, the mixing order is not specified, and the above-described components may be mixed in any order. For example, the components described above can be melt-mixed at a time, and can also be mixed in the following mixing order through the following steps (a-1) and (a-2). In particular, when the inorganic filler is used, the step (a) is preferably performed in the following mixing order through the following steps (a-1) and (a-2).

Step (a-1): A step of mixing the inorganic filler and the silane coupling agent to prepare a mixture.

Step (a-2): A step of melt-mixing the mixture obtained in the step (a-1) and all or a part of the base resin in the presence of an organic peroxide at a temperature equal to or higher than a decomposition temperature of the organic peroxide.

The inorganic filler and the silane coupling agent are premixed in the step (a-1), and thereby the silane coupling agent bonded or adsorbed to the inorganic filler by weak bonding and the silane coupling agent bonded or adsorbed to the inorganic filler by strong bonding can be formed in a well-balanced manner. This makes it possible to effectively prevent volatilization of the silane coupling agent and further condensation reaction between unadsorbed silane coupling agents at the time of melt-mixing in the step (a-2). As a result, the silane crosslinked resin formed body having further improved mechanical characteristics (tensile strength) and heat resistance resulting from the silane crosslinking method can be produced while showing more excellent appearance.

The mixing method and mixing conditions in the step (a-1) are not particularly limited, and examples thereof include a method and conditions in which mixing is performed by a dry method or a wet method, ordinarily at a temperature lower than the decomposition temperature of the organic peroxide, preferably 10 to 60°C, more preferably near room temperature (20 to 25°C) for about several minutes to several hours using a known mixer, a kneader, or the like. Particularly, dry mixing (dry blending) is preferably performed at a temperature lower than the decomposition temperature of the organic peroxide. Other conditions for dry mixing are appropriately determined.

In the step (a-1), the base resin can be mixed as long as the temperature lower than the decomposition temperature is maintained.

The organic peroxide is only required to exist when melt-mixing in the step (a-2) is performed, and may be mixed in the step (a-2), or preferably mixed in the step (a-1).

Then, the mixture obtained in the step (a-1) and all or a part of the base resin and the remaining components not mixed in the step (a-1) are melt-mixed in the presence of the organic peroxide at a temperature equal to or higher than the decomposition temperature of the organic peroxide to prepare a silane MB (step (a-2)). In this manner, a silane masterbatch containing silane graft resin is prepared. In the melt-mixing in this step, it is possible to prevent an excessive crosslinking reaction (generation of gel lumps) between the base resins while suppressing the volatilization and self-condensation of the silane coupling agent described above.

The melt-mixing method and conditions in the step (a-2) are not particularly limited, and the melt-mixing method and conditions in the step (a) can be applied.

In the step (a-2), at least the following is considered as an aspect in which the silane coupling agent is graft-reacted with the base resin. That is, there is an aspect in which the silane coupling agent bonded or adsorbed to the inorganic filler by weak bonding is detached from the inorganic filler, and is graft-reacted with the base resin. From this aspect, the crosslinked structure formed in the step (3) as described later does not incorporate the inorganic filler, and ordinarily becomes a crosslinked structure through a silanol condensate between silane coupling agents. Further, there is an aspect in which the silane coupling agent bonded or adsorbed to the inorganic filler by strong bonding is graft-reacted with the base resin, in a state of maintaining the bond or adsorption to the inorganic filler. From the above aspect, the crosslinked structure formed in the step (3) as described later incorporates the inorganic filler, and becomes a crosslinked structure through a silane coupling agent bonded to the inorganic filler as a starting point. The crosslinked structures in both the aspects are mixed, so that it is possible to construct a highly developed crosslinked structure including a crosslinked structure in which an inorganic filler is spirally wound around a silane crosslinked resin formed body.

In the step (a), an additive, and the like can also be mixed. However, in the step (a), it is preferable that the silanol condensation catalyst is not substantially mixed. This makes it possible to suppress the occurrence of the silanol condensation reaction of the silane coupling agent. In the present invention, the phrase "not substantially mixed" does not meant to exclude the situation in which the silanol condensation catalyst unavoidably exists, and means that the silanol condensation catalyst may exist in a range that can suppress the silanol condensation reaction, for example, in a range of 0.01 parts by mass or less with respect to 100 parts by mass of the base resin.

The silane MB prepared in the step (a) contains a reaction mixture of the base resin, the silane coupling agent, and preferably the inorganic filler, and contains a silane graft resin in which the silane coupling agent is graft-bonded to the base resin such an extent that it can be formed by the step (2) as described later. The silane coupling agent graft-bonded to the base resin includes a silane coupling agent bonded or adsorbed to the inorganic filler at a silanol condensable reaction site.

The silane MB is preferably in the form of a pellet or a powder.

(Step (b))

In the method of producing a formed body of the present invention, independently of the step (a) or after the step (a), the step (b) of preparing a catalyst masterbatch (catalyst MB) by melt-mixing the remainder of the base resin (carrier resin) and the silanol condensation catalyst is performed.

The melt-mixing method and conditions in the step (b) are not particularly limited, and the melt-mixing method and conditions in the step (a) can be applied. For example, the melt-mixing temperature may be equal to or higher than the melting temperature of the base resin, and is preferably 120 to 200°C, more preferably 140 to 180°C. Other conditions, such as a mixing time, can be appropriately set. For example, the mixing time can be 1 to 25 minutes, and is preferably 3 to 20 minutes.

The catalyst MB is preferably in the form of a pellet or a powder.

(Step (c))

In the method of producing a formed body of the present invention, the step (c) of obtaining a mixture by melt-mixing the silane MB and the silanol condensation catalyst or the catalyst MB is performed. Preferably, the silane MB and the catalyst MB are melt-mixed.

The mixing method is not particularly limited, but is basically similar to the melt-mixing in the step (a), and mixing is performed at least at a temperature at which the base resin melts. The mixing conditions in the step (c) are not particularly limited, and the mixing conditions in the step (a) can be applied. For example, the mixing temperature is appropriately selected according to the melting temperature of the base resin or the carrier resin. For example, the temperature is preferably 80 to 250°C, more preferably 100 to 240°C, and still more preferably 120 to 200°C. Other conditions, such as a mixing time, can be appropriately set.

In the melt-mixing in the step (c), a melt mixing method and conditions capable of maintaining the fluidity (formability) of the mixture are set. The silane graft resin in the mixture is an uncrosslinked body in which the silane coupling agent is not subjected to silanol condensation. Practically, when the melt-mixing is performed in the step (c), crosslinking of part (partial crosslinking) cannot be avoided, but formability is kept on the mixture to be obtained. For example, in order to avoid the occurrence or progress of the silanol condensation reaction, it is preferable that the silane MB and the silanol condensation catalyst are not kept in a high temperature state for a long period of time in the state of being mixed.

In the step (c), the silane MB and the silanol condensation catalyst or catalyst MB can be preferably dry-blended before both are melt-mixed. A method and conditions of dry blending are not particularly limited, and specific examples thereof include dry mixing and conditions in the step (a-1).

In this manner, the silane crosslinkable resin composition of the present invention is produced as a mixture.

This silane crosslinkable resin composition contains the silane graft resin, the silanol condensation catalyst, preferably the inorganic filler and the like. When the silane crosslinkable resin composition contains the inorganic filler, in the silane graft resin, the silanol condensable reaction site of the silane coupling agent may be bonded or adsorbed to the inorganic filler, but is not silanol condensed. Therefore, the silane graft resin contains the silane graft resin in which the silane coupling agent bonded or adsorbed to the inorganic filler is graft-bonded to the base resin, and the silane graft resin in which the silane coupling agent not bonded or adsorbed to the inorganic filler is graft-bonded to the base resin.

<Step (2)>

In the method of producing a silane crosslinked resin formed body of the present invention, the step (2) of obtaining a formed body by forming the mixture (silane crosslinkable resin composition) obtained in the step (1) is then performed.

The forming method is not particularly limited, and is appropriately selected according to the form of the target product. Examples of the forming method include extrusion forming using an extruder, extrusion forming using an injection forming machine, forming using any other forming machine, and spiral forming described later. In the case of producing an electric wire, the extrusion forming method is preferable from the viewpoint of productivity, and further from the viewpoint of being able to perform coextrusion with a conductor, and the like.

The forming conditions (melt-mixing conditions) are not particularly limited as long as they are conditions under which the formation can be achieved by uniform mixing, and the silane crosslinkable resin composition of the present invention does not cause a silanol condensation reaction. For example, the melt-mixing method and conditions of the step (c) can be applied.

In the case of using an extruder, it is preferable to set the temperature of the cylinder part to about 120 to 180°C and the temperature of the crosshead part (die) to about 160 to 200°C, although depending on various conditions such as the type of the base resin and take-up speed of the conductor or the like. The screw rotation speed of the extruder and the forming speed (linear velocity) in the extrusion forming is not particularly limited, and can be appropriately set according to the characteristics or performance of the extruder, the extrusion amount (coating amount), and the like. The linear velocity can ordinarily be 1 to 20 m/min.

The step (2) can be executed simultaneously with the step (c) or both steps can be continuously executed. For example, a series of steps can be employed in which the silane MB is mixed with the silanol condensation catalyst or the catalyst MB by dry blending or the like immediately before a coating device (extruder), and then melt-mixed in a coating device (step (c)), or the silane MB and the silanol condensation catalyst or the catalyst MB are separately placed in the coating device, and subsequently, melt-mixed (step (c)) and (coextrusion-formed) formed (step (2)) on an outer periphery of a conductor or the like.

In this manner, a formed body (uncrosslinked formed body) of the silane crosslinkable resin composition of the present invention is obtained. Partial crosslinking of the silane graft resin is unavoidable, similarly to the silane crosslinkable resin composition of the present invention, but the formed body is in a partially crosslinked state of keeping formability at which the composition can be formed in the step (2). Accordingly, this silane crosslinked resin formed body of the present invention is obtained as the formed body crosslinked or finally crosslinked, by executing the step (3).

<Step (3)>

In the method of producing a silane crosslinked resin formed body of the present invention, the step (3) of producing the silane crosslinked resin formed body of the present invention by bringing the formed body obtained in the step (2) and water into contact with each other is then performed. In the formed body obtained in the step (2), the silane graft resin is an uncrosslinked body. Accordingly, in this step, a silanol condensation reaction (dehydration condensation reaction) of a silanol condensable reaction site of the silane coupling agent graft-bonded to the base resin is caused to occur and progress (accelerate), and finally silane crosslinking is performed. Thus, the silane crosslinked resin formed body in which the silane coupling agent is subjected to silanol condensation and crosslinked can be obtained.

The contact between the uncrosslinked formed body and water can be performed by an ordinary method. Since the silanol condensation reaction progresses only by being left standing at normal temperature in the presence of moisture, for example, in a temperature environment of about 20 to 25°C, it is not necessary to actively bring the uncrosslinked formed body and water into contact with each other. From the viewpoint of accelerating the silanol condensation reaction (crosslinking reaction), it is preferable to actively bring the uncrosslinked formed body and water into contact with each other. Examples of the contact method include a method (condition) ordinarily applied to the silane crosslinking method, and examples thereof include a method of performing contact under an ordinary pressure environment, and specific examples thereof include exposure to a saturated water vapor atmosphere, exposure to a high humidity environment, immersion in water at room temperature or warm water (e.g. 50 to 90°C), placement in a wet heat bath, and exposure to high temperature water vapor. In addition, pressure may be applied to in order to penetrate moisture thereinto on the contact.

In this manner, the silane crosslinked resin formed body of the present invention is produced.

This silane crosslinked resin formed body contains a silane crosslinked resin in which a base resin (silane graft resin) is condensed through a siloxane bond. When the silane crosslinked resin formed body contains an inorganic filler, the silane-inorganic filler may be bonded to a silane coupling agent of the crosslinked base resin. Therefore, it is considered that the silane crosslinked resin contains a crosslinked resin in which a plurality of base resins is bonded or adsorbed to an inorganic filler by a silane coupling agent and bonded (crosslinked) through the inorganic filler and the silane coupling agent, and a crosslinked resin in which the silanol condensable reaction sites of the silane coupling agent graft-bonded to the base resin are hydrolyzed and silanol condensation reacted with each other to be crosslinked through the silane coupling agent (siloxane bond) (without through the inorganic filler).

The method of producing a formed body of the present invention can suppress generation of odor caused by decomposition of the silanol condensation catalyst or the like at the time of melt-mixing in the step (1), step (b), step (c), and step (2), particularly at the time of melt-mixing in the step (b). Accordingly, the silanol condensation catalyst represented by Formula (1) and having excellent catalytic activity can be contained up to the step (3) without reducing the content thereof, and the silanol condensation reaction (final crosslinking reaction) can be allowed to progress at an adequate reaction rate (crosslinking rate). As a result, a silane crosslinked resin formed body having excellent appearance and high crosslinking density can be produced.

EXAMPLES

Hereinafter, the present invention will be described in more detail based on Examples, but the present invention is not limited to these.

In Tables 1-1 to 1-2 (referred to as Table 1), the numerical values for the composition amount (content) of the respective examples are in terms of part by mass, unless otherwise specified. In addition, in each component column, the blank means that a composition amount of a corresponding component is 0 part by mass.

The details of compounds used in Examples and Comparative Examples are shown below and in Table 1.

<Base resin>

(Silane graft resin)

Linklon XCF730M (trade name): silane graft polyethylene, content of silane coupling agent: 5 mass%, manufactured by Mitsubishi Chemical Corporation

(Polyolefin resin)

LLDPE: EVOLUE SP0540 (trade name), linear low-density polyethylene, manufactured by Prime Polymer Co., Ltd.
SEEPS: SEPTON 4077 (trade name), styrene-ethylene-ethylene-propylene-styrene block copolymer, manufactured by KURARAY CO., LTD.
Oil: COSMO NEUTRAL 500 (trade name), paraffin oil, manufactured by COSMO OIL LUBRICANTS Co., Ltd.

<Silane coupling agent>

KBM-1003: vinyltrimethoxysilane, manufactured by Shin-Etsu Chemical Co., Ltd.

<Organic peroxide>

PERHEXA 25B: chemical substance name, 2,5-dimethyl-2,5-di(tert-butylperoxy)hexane, decomposition temperature: 154°C, manufactured by NOF CORPORATION

<Inorganic filler>

Magnesium hydroxide: MAGSEEDS FK621 (trade name), manufactured by Konoshima Chemical Co., Ltd.

<Silanol condensation catalyst>

Dioctyltin dilaurate: ADK STAB OT-1 (trade name), manufactured by ADEKA CORPORATION
Zirconium Acetylacetonate: NACEM Zr (trade name), manufactured by NIHON KAGAKU SANGYO CO., LTD.
Zinc Acetylacetonate: NACEM Zn (trade name), manufactured by NIHON KAGAKU SANGYO CO., LTD.
Tetra stearyl titanate: TA-90 (trade name), manufactured by Matsumoto Fine Chemical Co., Ltd.
Aluminum tris(ethyl acetoacetate): AL-3215 (trade name), manufactured by Matsumoto Fine Chemical Co., Ltd.
Aluminum tri-2-butoxide: AL-3001 (trade name), manufactured by Matsumoto Fine Chemical Co., Ltd.
Acetylacetonate aluminum bis(ethyl acetyl acetoacetate): AL-3200 (trade name), manufactured by Matsumoto Fine Chemical Co., Ltd.
Titanium tetraacetylacetonate: TC-401 (trade name), manufactured by Matsumoto Fine Chemical Co., Ltd.
Tetra stearyl titanate n-butyl titanate: TA-21 (trade name), manufactured by Matsumoto Fine Chemical Co., Ltd.
Alkylamine, zirconium compound: K-KAT672 (trade name), manufactured by King Industries, Inc.
Alkylamine, zinc carboxylate: K-KAT670 (trade name), manufactured by King Industries, Inc.
Zinc compound, alkylamine: K-KAT635 (trade name), manufactured by King Industries, Inc.
Metal salt of carboxylic acid: K-KAT633 (trade name), manufactured by King Industries, Inc.
Zinc compound, amine compound: K-KAT614 (trade name), manufactured by King Industries, Inc.
Alkyl aromatic sulfonic acid: NACURE CD-2150 (trade name), manufactured by King Industries, Inc.
Dinonylnaphthalene disulfonic acid: NACURE 155 (trade name), manufactured by King Industries, Inc.

<Examples 1 to 12 and Comparative Examples 1 to 13>

In each of the examples and comparative examples, a part of the base resin (specifically, the LLDPE shown in the "Catalyst MB" column in Table 1) was used in the mass ratio shown in the same column as the carrier resin of the catalyst MB.

The components shown in the "Silane MB" column in Table 1 were melt-mixed at 170 to 200°C using a Banbury mixer, and then the mixture was pelletized to prepare pellets of silane MB (step (a)).

Further, the components shown in the "Catalyst MB" column in Table 1 were melt-mixed at 170 to 200°C at the mass ratio shown in the same column using a Banbury mixer, then the mixture was pelletized to obtain pellets of catalyst MB, and the resultant pellets were used (step (b)).

Then, the prepared pellets of the silane MB and pellets of the catalyst MB were dry-blended at room temperature (25°C) for 2 minutes using a tumbler mixer immediately before extrusion forming to obtain a dry-blended product (dry blending step of the step (c)). At this time, the mixing ratios of the silane MB and the catalyst MB was set to the mass ratios shown in the "Silane MB" column and the "Catalyst MB" column in Table 1.

Then, a 25-mm (screw diameter) extruder (ratio of a screw effective length L to a diameter D: L/D = 25) was set to an extrusion conditions with a die temperature of 200°C, and with a cylinder temperature, divided into three zones toward the feeder side, of C3 = 170°C, C2 = 150°C, and C1 = 80°C. The dry-blended product thus prepared was introduced into the extruder. While the product was melt-mixed at a screw rotation speed of 40 rpm (the melt-mixing step in the step (c), the end of the step (1)), extrusion coating was performed on a 0.8 mmφ conductor made of a bare annealed copper wire at a linear velocity adjusted to have an outer diameter of 2.4 mmφ and a thickness of 0.8 mm to obtain a coated conductor (step (2)). In this case, the dry-blended product is melt-mixed in the extruder before extrusion forming, and thus a silane crosslinkable resin composition is prepared.

The resulting coated conductor was left standing in an environment of room temperature (25°C) and a relative humidity of 55% for 3 hours to bring the silane crosslinkable resin composition and water into contact with each other (step (3)).

In this manner, electric wires each having a coating layer formed of a silane crosslinked resin formed body was produced.

<Examples 13 and 14>

Electric wires having a coating layer formed of the silane crosslinked resin formed body was produced in the same manner as in Example 1 except that the step (b) was not performed and the silanol condensation catalyst was directly dry-blended instead of the catalyst MB in the dry blending step of the step (c), in the step (1) of Example 1.

<Examples 15 and 16>

Electric wires having a coating layer formed of the silane crosslinked resin formed body was produced in the same manner as in Example 1 except that the step (a) was not performed and the silane graft resin was used as the silane MB in the step (c), in the step (1) of Example 1.

The silanol condensation catalysts used and the produced electric wires (silane crosslinked resin formed bodies) were evaluated as described below during the production steps, and the results are shown in Table 1.

<Mass reduction rate of silanol condensation catalyst>

Aluminum cups each containing each silanol condensation catalyst (about 1.000 g) were placed on a hot plate heated to 100°C for 30 minutes, then the mass of each of the silanol condensation catalysts was measured, and the mass reduction rate (mass%) before and after heating was determined from Formula (W) below.

In Table 1, the determined mass reduction rate (mass%) is shown, and a case where the mass reduction rate (mass%) is less than 10.0% is evaluated as acceptable and rated as "○", and a case where the mass reduction rate (mass%) is 10.0% or more is evaluated as unacceptable and rated as "×".

$$\text{Formula (W): } [(w0-w)/w0] \times 100 \ (\%)$$

In Formula (W), w0 represents a catalyst mass (g) in an initial stage (before heating), and w represents a catalyst mass (g) after heating.

<Appearance test of electric wire>

The appearance test of the electric wire is a test for evaluating the high rate of the crosslinking rate (silanol condensation reaction rate) of the silane crosslinkable resin composition. The surface of the coating layer of each electric wire was visually observed to evaluate the occurrence of appearance defects and the presence of lumps.

Specifically, a case where the appearance defect and the presence of lumps could not be confirmed on the surface of the coating layer was evaluated as favorable and rated as "○", a case where the appearance defect and the presence of lumps could be confirmed on the surface of the coating layer of the electric wire having a production length of up to 5 m (not including 5 m) after the production of the electric wire, but the appearance defect or the presence of lumps could not be confirmed on the surface of the coating layer of the electric wire having a production length of 5 m or more was evaluated as acceptable and rated as "Δ". Further, a case where the appearance defect or the presence of lumps could be confirmed on the surfaces of the coating layers of both the electric wire with a production length of up to 5 m (not including 5 m) and the electric wire having a production length of 5 m or more or a case where the appearance defect and the presence of lumps could be confirmed only after production of the electric wire having a production length of 5 m or more was evaluated as unacceptable and rated as "×".

In this test, the term "appearance defect" refers to a defect caused by foaming on the surface (appearance) of the formed body (coating layer) and a defect such as recesses and protrusions or roughness: so-called melt fracture. In addition, the term "lumps" refer to gel-like protruding aggregates (gel lumps) formed by final crosslinking (silanol condensation reaction) that are present on the surface of the formed body (coating layer), or aggregated lumps in which raw materials are aggregated due to being incompatible.

<Environmental performance (problem of environmental hormones)>

A case where the silanol condensation catalyst used was not on the list of substances of very high concern (SVHC) of the Registration, Evaluation, Authorisation and Restriction of Chemicals (REACH) regulation was evaluated as acceptable and rated as "○", and a case where the silanol condensation catalyst was on the list was evaluated as unacceptable and rated as " × ".

<Measurement of heating deformation ratio>

This test is a test for evaluating the crosslinking density (heat resistance of the coating layer) and the slow rate of the crosslinking rate, and the heating deformation ratio was measured in accordance with UL758.

Specifically, at a measurement temperature of 121°C, a load of 2.45 N was applied to each of the produced electric wires in a direction perpendicular to the longitudinal direction. In this situation, the deformation ratio ([(thickness of coating layer before heating - thickness of coating layer after heating)/thickness of coating layer before heating] $\times$ 100) of the coating layer was calculated as the heating deformation ratio.

In a case where the heating deformation ratio was less than 20%, the silanol condensation reaction progressed rapidly to construct a high crosslinking density, and the case was evaluated as very favorable and rated as "⊙". A case where the heating deformation ratio was 20% or more and less than 40% was evaluated as favorable and rated as "○", a case where the heating deformation rate was 40% or more and less than 50% was evaluated as acceptable and rated as "Δ", and a case where the heating deformation rate was 50% or more was evaluated as unacceptable and rated as "×".

<Comprehensive evaluation>

As a result of each of the tests described above, a case where all the tests was passed was evaluated as excellent and rated "○", and a case where any test was failed was evaluated as unacceptable and rated "×".

[Table 1-1]

Table 1-1

| | | | | Examples | | | | | | | | | | | | | | | | |
|---|---|---|---|---|---|---|---|---|---|---|---|---|---|---|---|---|---|---|---|---|
| | | | | 1 | 2 | 3 | 4 | 5 | 6 | 7 | 8 | 9 | 10 | 11 | 12 | 13 | 14 | 15 | 16 |
| Silane MB | | Silane graft resin | Silane graft PE | Linklon XCF730M | | | | | | | | | | | | | | | 84 | 84 |
| | | Polyolefin resin | LLDPE | EVOLUE SP0540 | 50 | 50 | 50 | 50 | 50 | 50 | 50 | 50 | 50 | 50 | 50 | 50 | 70 | 70 | | |
| | | | SEEPS | SEPTON 4077 | 10 | 10 | 10 | 10 | 10 | 10 | 10 | 10 | 10 | 10 | 10 | 10 | 10 | 10 | | |
| | | | Oil | COSMO NEUTRAL 500 | 20 | 20 | 20 | 20 | 20 | 20 | 20 | 20 | 20 | 20 | 20 | 20 | 20 | 20 | | |
| | | Silane coupling agent | | KBM-1003 | 3 | 3 | 3 | 3 | 3 | 3 | 3 | 3 | 3 | 3 | 3 | 3 | 3 | 3 | | |
| | | Organic peroxide | | PERHEXA 25B | 0.1 | 0.1 | 0.1 | 0.1 | 0.1 | 0.1 | 0.1 | 0.1 | 0.1 | 0.1 | 0.1 | 0.1 | 0.1 | 0.1 | | |
| | | Inorganic filler | Magnesium hydroxide | MAGSEEDS FK621 | 60 | 60 | 60 | 60 | 60 | 60 | 60 | 60 | 60 | 60 | 60 | 60 | 60 | 60 | | |
| Catalyst MB | | Carrier resin | LLDPE | EVOLUE SP0540 | 20 | 20 | 20 | 20 | 20 | 20 | 20 | 20 | 20 | 20 | 20 | 20 | | | 20 | 20 |
| | | Silanol condensation catalyst | Dioctyltin dilaurate | ADK STAB OT-1 | | | | | | | | | | | | | | | | |
| | | | Zirconium Acetylacetonate | NACEM Zr | 0.2 | 0.5 | | | | | | | | | 0.1 | | | | | |
| | | | Zinc Acetylacetonate | NACEM Zn | | | 0.2 | 0.3 | | | | | | | | | | | | |
| | | | Tetra stearyl titanate | TA-90 | | | | | | | | | | | | 0.2 | | | | |
| | | | Aluminum tris(ethyl acetoacetate) | AL-3215 | | | | | 0.2 | 0.5 | 0.01 | 1 | 0.005 | 2 | 0.1 | | 0.2 | 0.5 | 0.2 | 0.5 |
| | | | Aluminum tri-2-butoxide | AL-3001 | | | | | | | | | | | | | | | | |
| | | | Acetylacetonate aluminum bis (ethyl acetyl acetoacetate) | AL-3200 | | | | | | | | | | | | | | | | |
| | | | Titanium tetraacetylacetonate | TC-401 | | | | | | | | | | | | | | | | |
| | | | Tetra stearyl titanate n-butyl titanate | TA-21 | | | | | | | | | | | | | | | | |
| | | | Alkylamine, zirconium compound | K-KAT672 | | | | | | | | | | | | | | | | |
| | | | Alkylamine, zinc carboxylate | K-KAT670 | | | | | | | | | | | | | | | | |
| | | | Zinc compound, alkylamine | K-KAT635 | | | | | | | | | | | | | | | | |
| | | | Metal salt of carboxylic acid | K-KAT633 | | | | | | | | | | | | | | | | |
| | | | Zinc compound, amine compound | K-KAT614 | | | | | | | | | | | | | | | | |
| | | | Alkyl aromatic sulfonic acid | NACURE CD-2150 | | | | | | | | | | | | | | | | |
| | | | Dinonylnaphthalene disulfonic acid | NACURE 155 | | | | | | | | | | | | | | | | |
| Evaluation | | | Comprehensive evaluation | | ○ | ○ | ○ | ○ | ○ | ○ | ○ | ○ | ○ | ○ | ○ | ○ | ○ | ○ | ○ | ○ |
| | | | Mass change rate (mass%) | | 4.1 | 4.1 | 2.0 | 2.0 | 0.0 | 0.0 | 0.0 | 0.0 | 0.0 | 0.0 | 1.0 | 0.0 | 0.0 | 0.0 | 0.0 | 0.0 |
| | | | Determination of mass change rate | | ○ | ○ | ○ | ○ | ○ | ○ | ○ | ○ | ○ | ○ | ○ | ○ | ○ | ○ | ○ | ○ |
| | | | Appearance of electric wire | | ○ | ○ | △ | △ | ○ | ○ | ○ | ○ | ○ | △ | ○ | △ | △ | △ | △ | △ |
| | | | Environmental performance | | ○ | ○ | ○ | ○ | ○ | ○ | ○ | ○ | ○ | ○ | ○ | ○ | ○ | ○ | ○ | ○ |
| | | | Heating deformation ratio | | ◎ | ◎ | ◎ | ◎ | ◎ | ◎ | ◎ | ◎ | △ | ◎ | ◎ | △ | ◎ | ◎ | ◎ | ◎ |

EP 4 692 244 A1

[Table 1-2]

Table 1-2

| | | | Comparative Examples | | | | | | | | | | | | |
|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 |
| Silane MB | Silane graft resin — Silane graft PE | Linklon XCF730M | 50 | 50 | 50 | 50 | 50 | 50 | 50 | 50 | 50 | 50 | 50 | 50 | 50 |
| | Polyolefin resin — LLDPE | EVOLUE SP0540 | 10 | 10 | 10 | 10 | 10 | 10 | 10 | 10 | 10 | 10 | 10 | 10 | 10 |
| | Polyolefin resin — SEEPS | SEPTON 4077 | 20 | 20 | 20 | 20 | 20 | 20 | 20 | 20 | 20 | 20 | 20 | 20 | 20 |
| | Oil | COSMO NEUTRAL 500 | 3 | 3 | 3 | 3 | 3 | 3 | 3 | 3 | 3 | 3 | 3 | 3 | 3 |
| | Silane coupling agent | KBM-1003 | 0.1 | 0.1 | 0.1 | 0.1 | 0.1 | 0.1 | 0.1 | 0.1 | 0.1 | 0.1 | 0.1 | 0.1 | 0.1 |
| | Organic peroxide | PERHEXA 25B | | | | | | | | | | | | | |
| | Inorganic filler — Magnesium hydroxide | MAGSEEDS FK621 | 60 | 60 | 60 | 60 | 60 | 60 | 60 | 60 | 60 | 60 | 60 | 60 | 60 |
| | Carrier resin — LLDPE | EVOLUE SP0540 | 20 | 20 | 20 | 20 | 20 | 20 | 20 | 20 | 20 | 20 | 20 | 20 | 20 |
| Catalyst MB — Silanol condensation catalyst | Dioctyltin dilaurate | ADK STAB OT-1 | 0.2 | 0.5 | | | | | | | | | | | |
| | Zirconium Acetylacetonate | NACEM Zr | | | | | | | | | | | | | |
| | Zinc Acetylacetonate | NACEM Zn | | | | | | | | | | | | | |
| | Tetra stearyl titanate | TA-90 | | | | | | | | | | | | | |
| | Aluminum tris(ethyl acetoacetate) | AL-3215 | | | | | | | | | | | | | |
| | Aluminum tri-2-butoxide | AL-3001 | | | 0.2 | | | | | | | | | | |
| | Acetylacetonate aluminum bis (ethyl acetyl acetoacetate) | AL-3200 | | | | 0.2 | | | | | | | | | |
| | Titanium tetraacetylacetonate | TC-401 | | | | | 0.2 | | | | | | | | |
| | Tetra stearyl titanate n-butyl titanate | TA-21 | | | | | | 0.2 | | | | | | | |
| | Alkylamine, zirconium compound | K-KAT672 | | | | | | | 0.2 | | | | | | |
| | Alkylamine, zinc carboxylate | K-KAT670 | | | | | | | | 0.2 | | | | | |
| | Zinc compound, alkylamine | K-KAT635 | | | | | | | | | 0.2 | | | | |
| | Metal salt of carboxylic acid | K-KAT633 | | | | | | | | | | 0.2 | | | |
| | Zinc compound, amine compound | K-KAT614 | | | | | | | | | | | 0.2 | | |
| | Alkyl aromatic sulfonic acid | NACURE CD-2150 | | | | | | | | | | | | 0.2 | |
| | Dinonylnaphthalene disulfonic acid | NACURE 155 | | | | | | | | | | | | | 0.2 |
| Evaluation | Comprehensive evaluation | | × | × | × | × | × | × | × | × | × | × | × | × | × |
| | Mass change rate (mass%) | | 0.0 | 0.0 | 30.4 | 18.9 | 10.2 | 26.4 | 13.4 | 26.4 | 12.0 | 10.4 | 10.3 | 10.3 | 40.0 |
| | Determination of mass change rate | | ○ | ○ | × | × | × | × | × | × | × | × | × | × | × |
| | Appearance of electric wire | | ○ | ○ | ○ | ○ | ○ | ○ | ○ | ○ | ○ | ○ | ○ | ○ | × |
| | Environmental performance | | × | × | ○ | ○ | ○ | ○ | ○ | ◎ | ○ | ○ | △ | ○ | ○ |
| | Heating deformation ratio | | ◎ | ◎ | △ | ○ | ○ | ○ | ○ | × | ○ | ○ | △ | ○ | × |

The results of Table 1 show the following matters.

That is, in Comparative Examples 1 and 2 using the silanol condensation catalyst: an organic tin compound, the mass change rate of the silanol catalyst is 0.0 mass% and the generation of odor can be suppressed, and the catalytic activity is high. However, there is the problem of environmental hormones, and there is a high possibility that the silanol condensation catalyst cannot be used in the future. Meanwhile, in Comparative Examples 3 to 13 using the silanol condensation catalyst that does not satisfy Formula (1) or the mass reduction rate specified in the present invention although there is no concern about environmental hormones, odor is generated. Further, in Comparative Examples 8, 12, and 13, the crosslinking reaction cannot be progressed at an adequate crosslinking rate. As a result, in any of the comparative examples, a silane crosslinked resin formed body having excellent appearance and high crosslinking density while suppressing generation of odor cannot be produced with excellent manufacturability.

Meanwhile, in Examples 1 to 16 using the silanol condensation catalyst that satisfies Formula (1) and the mass reduction rate specified in the present invention, the crosslinking reaction can be progressed at an adequate crosslinking rate while suppressing generation of odor. As a result, in any of the examples, a silane crosslinked resin formed body having excellent appearance and high crosslinking density can be produced with high manufacturability (productivity) upon using the silanol condensation catalyst free of the problem of environmental hormones is used. This shows that in the silane crosslinkable resin composition of the present invention, a silanol condensation catalyst having high catalytic activity and no concern of environmental hormone action is used instead of the organic tin compound, and it is possible to sufficiently meet environmental regulations.

Having described the present invention as related to the embodiment, it is our intention that the present invention not be limited by any of the details of the description, unless otherwise specified, but rather be construed broadly within its spirit and scope as set out in the accompanying claims.

The present application claims priority of Patent Application No. 2023-051164, filed in Japan on March 28, 2023, which is herein incorporated by reference as part of the present specification.

**Claims**

1.  A silane crosslinkable resin composition comprising at least one kind of silanol condensation catalyst represented by the following Formula (1) and having a mass reduction rate of less than 10.0% when heated at 100°C for 30 minutes, and not comprising a tin-containing silanol condensation catalyst:

    Formula (1):        $M(R_1)_a(R_2)_b$

    wherein, in the Formula (1), M represents aluminum, titanium, zirconium, or zinc,
    $R_1$ represents a ligand having at least one of an alkyl group, a carbonyl group, a carboxy group, a hydroxy group, an alkoxy group, an aryl group, an alkylcarbonyloxy group, or an arylcarbonyloxy group,
    $R_2$ represents an alkyl or arylcarbonyloxy group, or a nitrogen-free substituent,
    a is an integer of 1 to 4, and b is an integer of 0 to 3.

2.  The silane crosslinkable resin composition according to claim 1, wherein the $R_1$ represents acetylacetone, ethyl acetoacetate, or a conjugate base thereof.

3.  The silane crosslinkable resin composition according to claim 1 or 2, wherein the M is aluminum, zirconium, or zinc.

4.  The silane crosslinkable resin composition according to any one of claims 1 to 3, comprising a base resin, wherein the base resin contains a polyolefin resin.

5.  The silane crosslinkable resin composition according to any one of claims 1 to 4, comprising a base resin, wherein a content of the silanol condensation catalyst with respect to 100 parts by mass of the base resin is 0.01 parts by mass to 1 part by mass.

6.  The silane crosslinkable resin composition according to any one of claims 1 to 5, comprising a base resin, wherein 0.5 to 400 parts by mass of an inorganic filler is contained with respect to 100 parts by mass of the base resin.

7.  A silane crosslinked resin formed body of the silane crosslinkable resin composition according to any one of claims 1 to 6.

8.  An electric wire comprising the silane crosslinked resin formed body according to claim 7 as a coating layer.

## INTERNATIONAL SEARCH REPORT

| International application No. |
|---|
| **PCT/JP2024/009253** |

**A. CLASSIFICATION OF SUBJECT MATTER**

*C08L 101/00*(2006.01)i; *C08K 5/56*(2006.01)i; *C08K 5/057*(2006.01)i; *C08L 23/00*(2006.01)i; *H01B 7/02*(2006.01)i
FI:   C08L101/00; C08K5/057; C08K5/56; H01B7/02 F; C08L23/00

According to International Patent Classification (IPC) or to both national classification and IPC

**B. FIELDS SEARCHED**

Minimum documentation searched (classification system followed by classification symbols)

C08L101/00; C08K5/56; C08K5/057; C08L23/00; H01B7/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN); Japio-GPG/FX

**C. DOCUMENTS CONSIDERED TO BE RELEVANT**

| Category* | Citation of document, with indication, where appropriate, of the relevant passages | Relevant to claim No. |
|---|---|---|
| X | JP 2014-193944 A (MITSUBISHI CHEMICAL CORPORATION) 09 October 2014 (2014-10-09) claims, paragraph [0018] | 1-5, 7-8 |
| Y | | 6-8 |
| X | US 2015/0314509 A1 (BOREALIS AG) 05 November 2015 (2015-11-05) claims, paragraph [0083] | 1-5, 7-8 |
| Y | | 6-8 |
| X | JP 2012-30425 A (TOSOH CORP.) 16 February 2012 (2012-02-16) claims, example 9 | 1-5, 7 |
| A | | 6, 8 |
| Y | JP 2019-116583 A (THE FURUKAWA ELECTRIC CO., LTD.) 18 July 2019 (2019-07-18) claims, examples | 6-8 |

☑ Further documents are listed in the continuation of Box C.   ☑ See patent family annex.

| | |
|---|---|
| *    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **09 May 2024** | **21 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**EP 4 692 244 A1**

## INTERNATIONAL SEARCH REPORT

International application No.

**PCT/JP2024/009253**

### C. DOCUMENTS CONSIDERED TO BE RELEVANT

| Category* | Citation of document, with indication, where appropriate, of the relevant passages | Relevant to claim No. |
|---|---|---|
| Y | WO 2020/196049 A1 (THE FURUKAWA ELECTRIC CO., LTD.) 01 October 2020 (2020-10-01)<br>claims, examples | 6-8 |
| A | JP 2013-91745 A (YAZAKI ENERGY SYSTEM CORP.) 16 May 2013 (2013-05-16) | 1-8 |
| A | JP 2018-90734 A (MCPP INNOVATION LLC) 14 June 2018 (2018-06-14) | 1-8 |

Form PCT/ISA/210 (second sheet) (July 2022)

## INTERNATIONAL SEARCH REPORT
### Information on patent family members

International application No.

**PCT/JP2024/009253**

| Patent document cited in search report | | | Publication date (day/month/year) | Patent family member(s) | | | Publication date (day/month/year) |
|---|---|---|---|---|---|---|---|
| JP | 2014-193944 | A | 09 October 2014 | (Family: none) | | | |
| US | 2015/0314509 | A1 | 05 November 2015 | WO | 2014/095044 | A1 | |
| | | | | EP | 2746296 | A1 | |
| | | | | KR | 10-2015-0086534 | A | |
| | | | | CN | 104936992 | A | |
| JP | 2012-30425 | A | 16 February 2012 | (Family: none) | | | |
| JP | 2019-116583 | A | 18 July 2019 | (Family: none) | | | |
| WO | 2020/196049 | A1 | 01 October 2020 | (Family: none) | | | |
| JP | 2013-91745 | A | 16 May 2013 | (Family: none) | | | |
| JP | 2018-90734 | A | 14 June 2018 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002146150 A
- JP 2014193944 A
- JP 2016121203 A
- WO 2023051164 A